# EUROPEAN PATENT APPLICATION

(11) **EP 4 588 697 A1**
(43) Date of publication of application: **23.07.2025**
(21) Application number: 25152110.0
(22) Date of filing: 15.01.2025
(51) Int. Cl.: B60G 17/052, F16K 11/07

(54) **A VALVE ASSEMBLY**

(30) Priority: 16.01.2024 GB 202400629
(71) Applicant: Haldex Aktiebolag, 261 24 Landskrona (SE)
(72) Inventor: AHMED, Rabia, Lindley, CV13 6DE (GB); SINGH, Daljit, Lindley, CV13 6DE (GB)
(74) Representative: Forresters IP LLP

(57) **Abstract**

A valve assembly for controlling a lift axle of a vehicle, the valve assembly including a valve body, a valve actuator assembly, and a piston moveable between a first position and a second position relative to the body, and an interface between the valve body and the valve actuator assembly, the interface including a seat for the piston and a connection part for enabling the connection of the valve body to the valve actuator assembly, and a method of controlling a lift axle of a vehicle including providing a valve assembly including a valve body, a valve actuator assembly and a piston moveable between a first position corresponding to a first condition in which the lift axle of the vehicle is lowered and a second position corresponding to a second condition in which the lift axle of the vehicle is lifted.

## Description

### FIELD

This invention relates to a valve assembly for controlling a lift axle of a vehicle and a method of controlling a lift axle of a vehicle

### BACKGROUND

It is known to provide vehicles, particularly larger vehicles such as trucks and cranes with one or more lift axles. A lift axle is provided to enable the wheels carried by the lift axle to be raised and lowered, such that traction and/or stability can be increased when lowered, but reduced when lifted, which improves fuel efficiency, wear on tyres and the vehicle undercarriage and optimises weight distribution, for example. A vehicle, or part of a vehicle, e.g. a trailer, may include one or more lift axles.

Electrically controlled raising and lowering of one or more lift axles of a vehicle, and automatic control are known. However, traditional lift axle systems are often complex with multiple components and numerous fittings.

It is an aim of the present disclosure to provide an improved valve assembly suitable for a use in the control of a lift axle, and/or an improved method of controlling a lift axle.

### BRIEF DESCRIPTION OF THE INVENTION

There is provided a valve assembly for controlling a lift axle of a vehicle, the valve assembly including a valve body, a valve actuator assembly, and a piston moveable between a first position and a second position relative to the body, and an interface between the valve body and the valve actuator assembly, the interface including a seat for the piston and a connection part for enabling the connection of the valve body to the valve actuator assembly.

The interface may include at least one fluid flow path.

The interface may include a fluid flow path which forms part of a first fluid flow path of the valve assembly, between a supply of pressurised fluid an actuator of a vehicle lift axle.

The interface may include a fluid flow path which forms part of a second fluid flow path of the valve assembly, between an internal chamber of the piston and an exhaust port.

The exhaust port of the second fluid flow path may be an exhaust port of the valve actuation assembly.

The interface may include a sleeve that extends into a chamber of the valve body.

The interface may include a collar that is configured to engage with a part of the valve actuation assembly.

The piston may include a first part and a second part, each part including a corresponding internal chamber. The internal chambers of the first part and the second part may be separated from one another by an impermeable barrier.

At least one of first part and the second part of the piston may include an opening that enables fluid communication between the corresponding internal chamber and a port of the valve assembly.

The interface may be configured to enable fluid flow through the opening that enables fluid communication between the internal chamber of the first part of the piston and an exhaust port of the valve actuation assembly when the piston is in the first position and to prevent the flow of fluid through the opening of the internal chamber of the first part of the piston when the piston is in the second position relative to the interface.

The interface may be configured to close an inlet port communicable with a supply of pressurised fluid when the piston is in the first position relative to the interface, and to open the inlet port, to enable fluid communication between the supply of pressurised fluid and an actuator of a lift axle when the piston is in the second position relative to the interface.

The valve actuator assembly may include at least one connection formation that corresponds with a connection formation of the interface.

There is provided a vehicle suspension assembly including a valve assembly as described herein.

There is provided a method of controlling a lift axle of a vehicle including providing a valve assembly including a valve body, a valve actuator assembly and a piston moveable between a first position corresponding to a first condition in which the lift axle of the vehicle is lowered and a second position corresponding to a second condition in which the lift axle of the vehicle is lifted, the valve actuator assembly including an electrically operated valve actuator that is configured to a receive a control signal and control the position of the piston in accordance with the control signal, wherein when the piston is in the first position, a first port of the valve body is closed; a second port of the valve body is fluidly communicable with a third port of the valve body, and a fourth port of the valve body is fluidly communicable with a fifth port of the body causing an actuator of the lift axle to be lowered; and wherein when the piston is in the second position, the first port is open and in fluid communication with the fourth port, so as to supply pressurised fluid to an actuator of the second axle to lower the second axle; the second port is closed and the third port is in fluid communication with the fifth port, the method including providing a fluid flow path through an interface provided between the valve body and the valve actuator assembly.

The method may include enabling fluid communication of the first port with the fourth port via a fluid flow path through the interface.

The control signal may be provided from an electronic braking system of the vehicle.

The control signal may correspond to a load signal indicative of the load of the vehicle.

### BRIEF DESCRIPTION OF THE FIGURES

In orderthatthe present disclosure may be more readily understood, preferable embodiments thereof will now be described, by way of example only, with reference to the accompanying drawings, in which:
FIGURE 1 is a cross-sectional view of a valve assembly in a first condition;
FIGURE 2 is a cross-sectional view of the valve assembly of Figure 1 in a second condition;

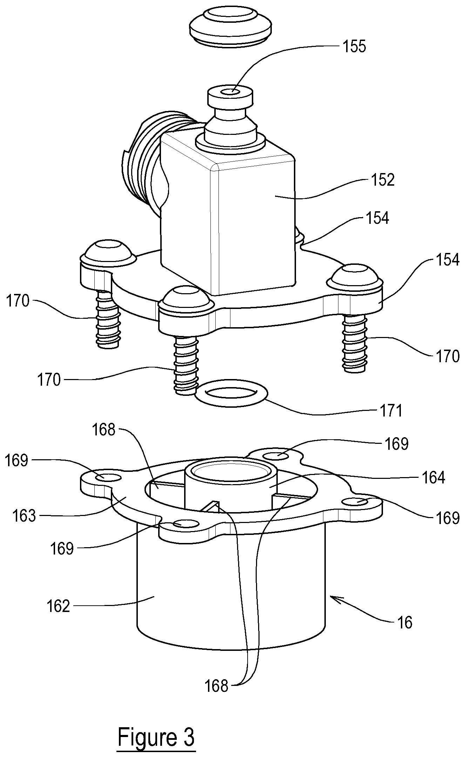

FIGURE 3 is an exploded perspective view of a valve actuation assembly and an interface of the valve assembly of Figures 1 and 2;

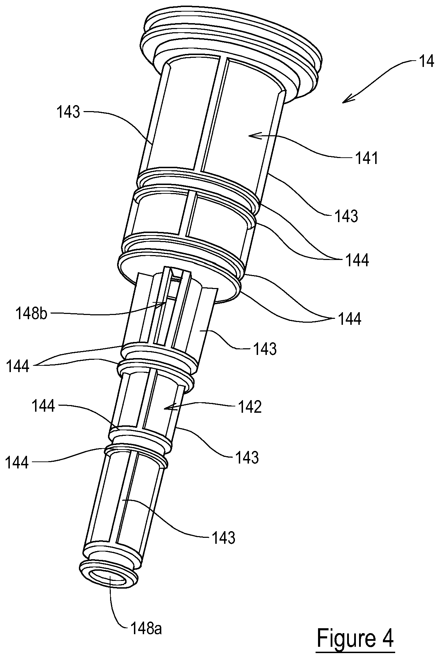

FIGURE 4 is a perspective view of a piston of the valve assembly of Figures 1 and 2;

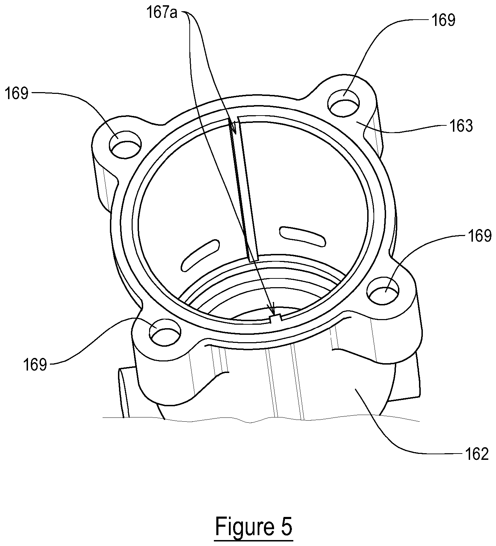

FIGURE 5 is a perspective view of a part of the interface shown in Figure 3;

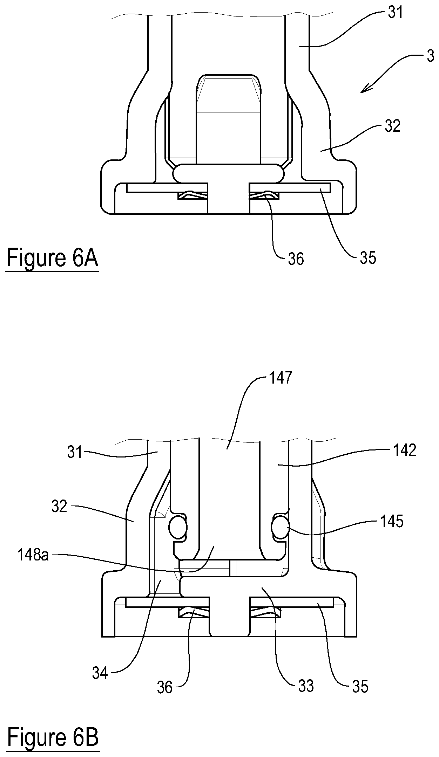

FIGURE 6A is a first cross-sectional view of a fifth port of the valve assembly of Figures 1 and 2;
FIGURE 6B is a second cross sectional view of the port of Figure 6A shown in combination with a part of a piston of the valve assembly;

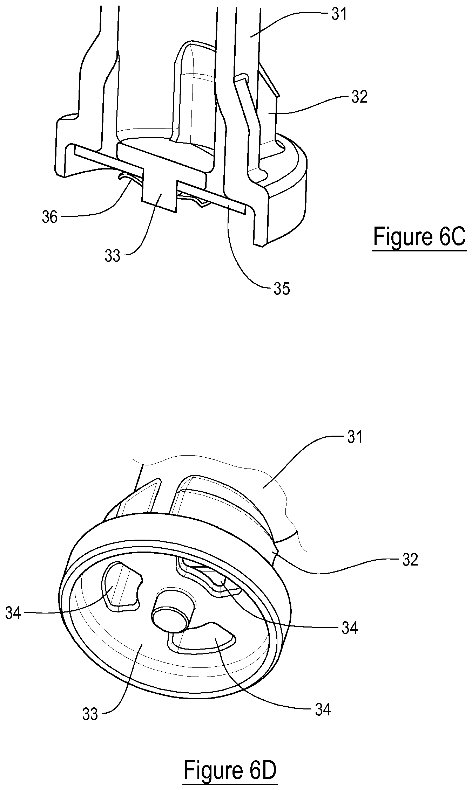

FIGURE 6C is a perspective cross-sectional view of the port of Figure 6A;
FIGURE 6D is an alternative perspective view of the port of Figure 6A;
Figure 7 is an illustrative cross-sectional view of the valve assembly of Figures 1 and 2 in its first condition, showing fluid flow paths through the valve assembly in the first condition;
FIGURE 8 is an illustrative cross-sectional view of the valve assembly of Figures 1 and 2 in the second condition, showing fluid flow paths through the valve assembly in the second condition;

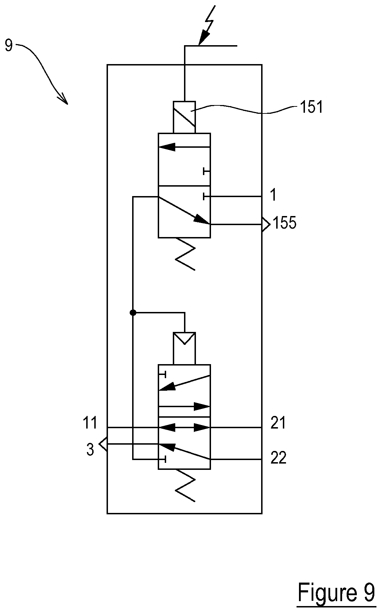

FIGURE 9 is a schematic diagram of a valve of the valve assembly of Figures 1 and 2; and

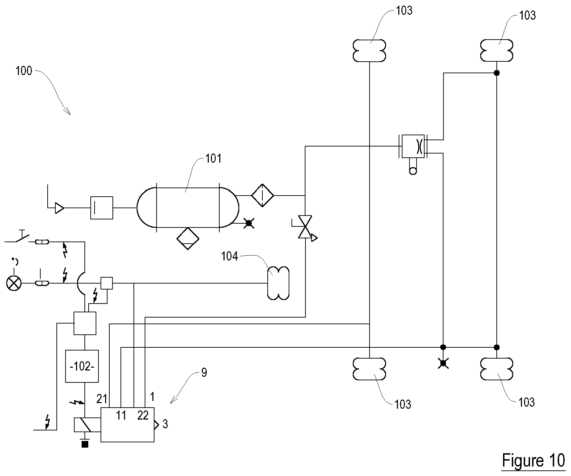

FIGURE 10 is a schematic circuit diagram of a vehicle braking and suspension system, including the valve assembly of Figures 1 and 2.

### DETAILED DESCRIPTION OF THE DISCLOSURE

There is provided a valve arrangement 10 for use in a lift axle system of a vehicle. The valve arrangement 10 includes a valve 9 including a valve body 12 and a piston 14 which is moveable within a chamber 13 of the body 12 between a first position and a second position. The valve arrangement 10 includes a valve actuator arrangement 15. The valve actuator arrangement 15 may include a solenoid 151. The valve arrangement 10 may include an interface 16 between the valve actuator arrangement 15 and the valve body 12. The valve arrangement 10 may include a resilient member 18, e.g. a spring, to bias the piston towards the first or the second position.

The valve arrangement 10 includes a first port 1. The first port 1 may be an inlet. The first port 1 enables fluid communication between a source of pressurised fluid 101, e.g. air, and the chamber 13. The first port 1 may be fluidly communicable with a source of pneumatic fluid 101 for a suspension system and/or braking system 100 of the vehicle.

A second port 11 may enable fluid communication between the chamber 13 and a suspension actuator, e.g. bellows of a first axle of the vehicle. The second port 11 may be an inlet. The second port 11 may enable fluid communication between the chamber 13 and one or more suspension actuators 103 one or more standard axles of the vehicle (a standard axle being one that is not configured as a lift axle). The second port 11 may be fluidly communicable with a levelling valve of the suspension system 100 of the vehicle.

A third port 21 may enable fluid communication between the chamber 13 and a suspension actuator 104, e.g. suspension bellows, of a second axle of the vehicle. The second axle may be a liftable axle. The third port 21 may be configured as an inlet and an outlet of the chamber 13.

A fourth port 22 may enable fluid communication between the chamber 13 and the actuator of the second axle. The fourth port 22 may be configured as an inlet and an outlet to the chamber 13. The fourth port 22 may enable fluid communication between the chamber 13 and an actuator configured to lift the second axle.

A fifth port 3 may be an outlet from the chamber 13. The fifth port 3 may be configured as an exhaust port, to enable the flow of fluid out of the chamber 13 to a lower pressure area, e.g. atmosphere. The third port 21 may be fluidly communicable with the fifth port 3. The fourth port 22 may be fluidly communicable with the fifth port 3.

The fifth port 3 may include a first part 31 and a second part 32. The first part 31 and the second part 31 may be adjacent one another and fluidly communicable with one another. The first part 31 may be smaller in size, e.g. have a smaller internal diameter than the second part 32. The fifth port 3 may be substantially funnel-shaped. The fifth port 3 may include a base member 33. The base member 33 may be integrally formed with the body 12. The second part 32 may include one or more openings 34, the second part may include three openings 34, for example. The or each opening 34 may be provided in the base member 33. The or each opening 34 enable fluid communication between the interior of port 3 and a relatively low pressure area. The or each opening 34 may be spaced substantially circumferentially from one another. Each opening 34 may be substantially arcuate, or include an arcuate portion. The fifth port 3 may also include a membrane 35. The membrane may be positioned adjacent the base 33. The membrane 35 may be flexible. Fluid may pass through and/or around the membrane 35. The fifth port 3 may also include a retaining member 36 configured to hold the membrane 35 in place. The retaining member 36 may be a biasing member for biasing the membrane 35.

The piston 14 may include a first part 141 and a second part 142. The first part 141 may have a larger outer dimension (e.g. diameter) than the second part 142.

The body 12 may include a first valve seat 122 against which the piston 14 rests when in its second position. The larger first part 141 of the piston 14 is seated against the first valve seat 122 when the piston 14 is in its second position.

The piston 14 may include one or more seal receiving formations 144, to receive a seal 145, such as an o-ring. The or each seal receiving formation 144 may include pair of collars or lips, configured to inhibit the associated seal from moving longitudinally relative to the piston 14. The or each seal receiving formation 144 may extend substantially circumferentially around an outer surface of the piston 14, to seal against an inner surface of the chamber 13.

One or both of the first part and the second part may include one or more ribs 143, the or each rib 143 extending substantially longitudinally along the respective part 141, 142. The or each rib 143 may extend along the outer surface of the piston 14, between adjacent seal receiving formations 144.

The first part 141 of the piston 141 include an internal chamber 146. The internal chamber 146 may be defined by an outer wall of the first part 141 of the piston 14. The outer wall of the first part 141 of the piston 14 may be substantially impermeable, such that the wall creates a barrier between the internal chamber 146 of the first part 141 of the piston 14 and the chamber 13 of the valve body 12, inhibiting the flow of fluid between the chamber 13 of the valve body 12 and the internal chamber 146 of the first part 141 of the piston 14.

The second part 142 may include an internal chamber 147. The internal chamber 147 of the second part 142 of the piston 14 may be defined by an outer wall of the second part 142 of the piston 14. An outer diameter of the outer wall of the second part 142 of the piston 14 may correspond with an internal diameter of the first part 31 of the fifth port 3.

The piston 14 may include one or more openings and/or apertures 148 through which fluid may flow, depending upon the position of the piston relative to the body 12, enabling fluid communication between the internal chamber 147 of the second part 142 of the piston 14 and the chamber 13 of the valve body 12. The piston 14 may include a first opening 148a positioned towards the end of the piston 14 positioned nearest the fifth port 3. The first opening 148a may enable fluid communication between the internal chamber 147 of the second part 142 of the piston 14 and the fifth port 3. The piston 14 may include one or more apertures 148b. The or each aperture 148b may be elongate. The or each aperture 148b may be formed in the wall of the second part 142. The or each aperture 148b may extend substantially longitudinally along a portion of the second part 142. The or each aperture 148b may be positioned towards an end of the second part 142 that is adjacent the first part 141 of the piston 14. The or each aperture 148b may be positioned at the opposite end of the second part 142 of the piston 14 from the first opening 148a. The or each aperture 148b may have an area of approximately 7mm². The greater the area of the or each aperture 148b, the better. The number of apertures 148b may be selected dependent upon the area of the or each aperture 148b that it is achievable and/or practical. When the piston 14 is in its first position, the or each aperture 148b may open a fluid flow path between the fourth port and the fifth port, and in the second position of the piston 14, the or each aperture 148b may be closed.

The piston 14 may include a barrier 149, that separates the internal chamber 146 of the first part 141 of the piston 14 from the internal chamber 147 of the second part 142 of the piston 14. The barrier 149 may be impermeable to fluids, e.g. air.

The valve actuator arrangement 15 may include an actuator body 152 for housing the valve actuator, e.g. the solenoid 151. The valve actuator arrangement 15 may include a connecting part 153, for connecting the valve actuator arrangement 15 to the body 12 of the valve. The connecting part 153 may include a flange or lip which projects outwardly of the actuator body 152. The connecting part 153 may include one or more connecting formations 154. The connecting part 153 may include four connecting formations 154, for example. Each connecting formation 154 may be positioned at or near a corner of the connecting part 153. Each connecting formation 154 may include an opening to receive a fixing 170. The connecting part 153 may be integral with the actuator body 152. The actuator body 152 may include an exhaust port 155.

The interface 16 may include a seat 161. The interface 16 may include a sleeve 162 and a flange 163. The sleeve 162 may be configured to fit inside an inner surface of the chamber 13. The interface 16 may be manufactured from a plastics material, for example glass reinforced nylon. The sleeve 162 may extend longitudinally along the inner surface of the chamber 13. The distance that the sleeve 162 extends into the chamber 13 may correspond with the distance the piston 14 may travel in the chamber 13. The sleeve 162 may act as a liner of a part of the chamber 13. Engagement between the sleeve 162 and the chamber 13 may be a push-fit. The flange 163 may be configured to engage with an upper surface of the body 12. The flange 163 may be configured to engage with a part or parts of the valve actuator arrangement 15. The flange 163 may be configured to engage with the connecting formation of the valve actuator arrangement. The flange 163 may include one or more openings 169 for receiving a fixing 170 provided to connect the valve actuation arrangement 15 to the valve body 12. Each opening 169 may correspond with an opening of a connecting formation 154 of the valve actuation arrangement 15.

The interface 16 may include a collar 164. The collar 164 may protrude substantially longitudinally from the seat 161. The collar 164 may extend in a generally opposite direction from the sleeve 162. The collar 164 may be substantially annular. The collar 164 may have a smaller outer dimension than the sleeve 162. The collar 164 may be engageable with a part of the valve actuator arrangement 15. The collar 164 may include a seal receiving formation 165 for receiving a seal 171, for example an o-ring. The seal receiving formation 165 may be positioned on an inner surface of the collar 164 such that the seal 171 may sit inside the collar 164. The collar 164 may substantially surround a part of the solenoid 151. The collar 164 may be attached to the sleeve 162 and/or the flange 163 by one or more ribs 168. The or each rib 168 may extend substantially radially relative to the sleeve 162 and/or the collar 163. The interface 16 may include four ribs 168, for example.

The interface 16 may enable fluid communication between the first port 1 and the first internal chamber 146 of the piston 14. The interface 16 may enable fluid communication between the chamber 13 of the valve body 12 and the valve actuator assembly 15.

The interface 16 may include a first fluid flow path 166. The first fluid flow path 166 may include a first orifice that extends through the interface 16, enabling fluid communication between the internal chamber 146 of the first part 141 of the piston 14 and the valve actuator arrangement 15, for example the solenoid body 152. The first fluid flow path 166 may be fluidly communicable with the exhaust port 155 of the actuator body 152.

The interface may include a second fluid flow path 167. The second fluid flow path may include a second orifice that extends through the interface 16 to enable fluid communication between the first port 1 and the chamber 13 of the valve body 12. The second fluid flow path 167 may include one or more channels 167a. The or each channel 167a may extend along an inner surface of the sleeve 162. The or each channel 167a may extend substantially longitudinally along the interface 162. The or each channel 167a may enable fluid communication between the first port 1 of the body and a part of the valve actuation arrangement 15, e.g. the solenoid 151.

The valve arrangement 10 may be arranged in a first condition and a second condition.

The first condition of the valve arrangement 10 may correspond with a first condition of the second axle. The first condition of the valve arrangement 10 may correspond with a lowered configuration of the second axle.

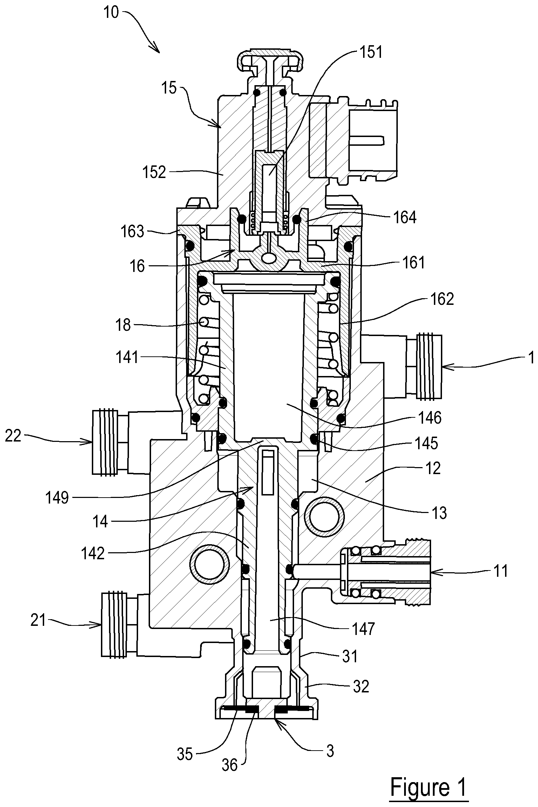

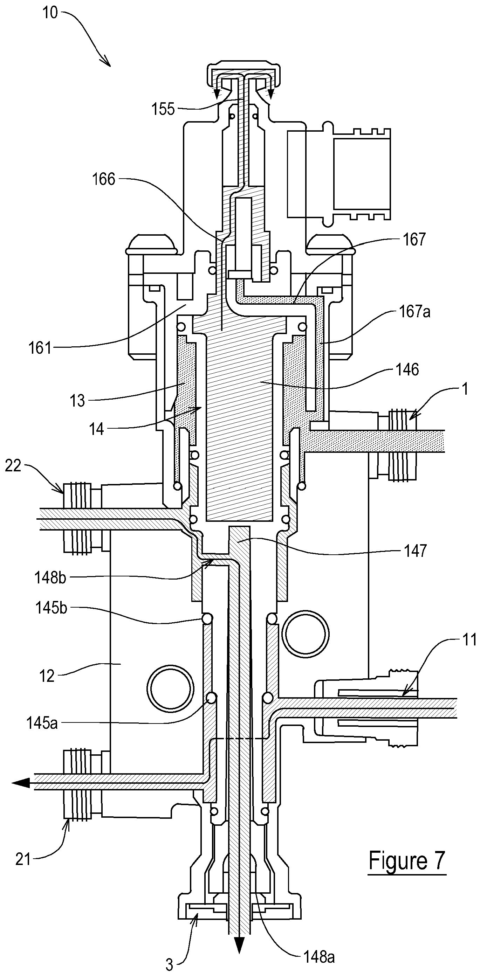

In the first condition, which may be enabled when the valve actuator, e.g. the solenoid 151, is not energised, the piston 14 is in its first position relative to the valve body 12, i.e. within the chamber 13. In the first condition (as shown in Figures 1 and 7), the first port 1 is closed; the second port 11 is fluidly communicable with the third port 21, and the fourth port 22 is fluidly communicable with the fifth port 3, i.e. vented to a lower pressure region, e.g. to atmosphere. The piston 14 may be seated against the seat 161 of the interface 16, such that the fluid flow path between the first port 1 and the internal chamber 146 of the first part 141 of the piston 14 is closed. The internal chamber 146 of the first part 141 of the piston 14 is in fluid communication with the valve actuation member through the first fluid flow path 166 through the interface 16, to the valve actuator exhaust 155. The second port 11 is permitted to fluidly communicate with the third port 21 since the outer diameter of the second part 142 of the piston is such that fluid is permitted to flow around the outside of the second part 142 of the piston 14. The piston 14 is not seated against the first valve seat 122. A seal 145a positioned on the exterior of the second part 142 of the piston 14 is not engaged with the wall of the chamber 13 since the second part 142 of the piston 14 is narrower than the internal diameter of the chamber 13 near to the second port 11 when the piston 14 is in the first position. There is a clearance between the second part of the piston 14 and the inner wall of the chamber 13 through which fluid may pass. The fourth port 22 is fluidly communicable with the fifth port 3 through the or each aperture 148a, which enables the flow of fluid from the fourth port 22 into the internal chamber 147 of the second part 142 of the piston 14. Fluid is permitted to flow from the internal chamber 147 of the second part 142 of the piston 14 through the first opening 148 in the piston 14, to a lower pressure region, e.g. to atmosphere.

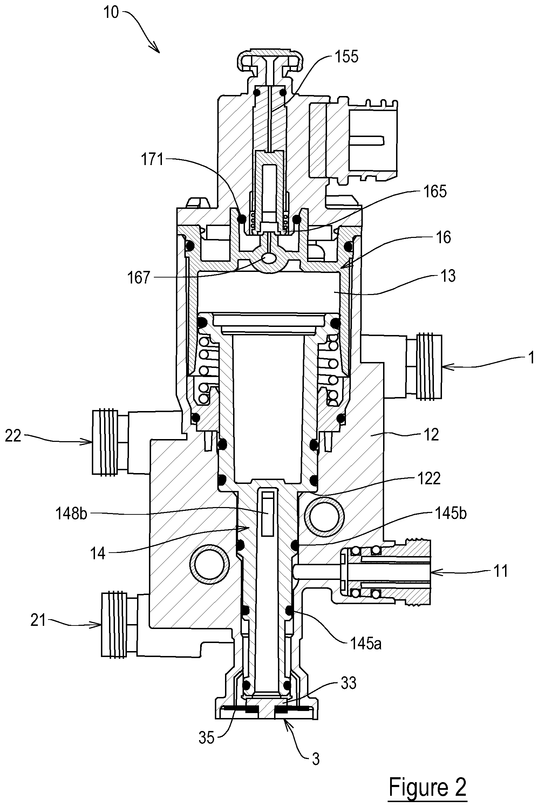

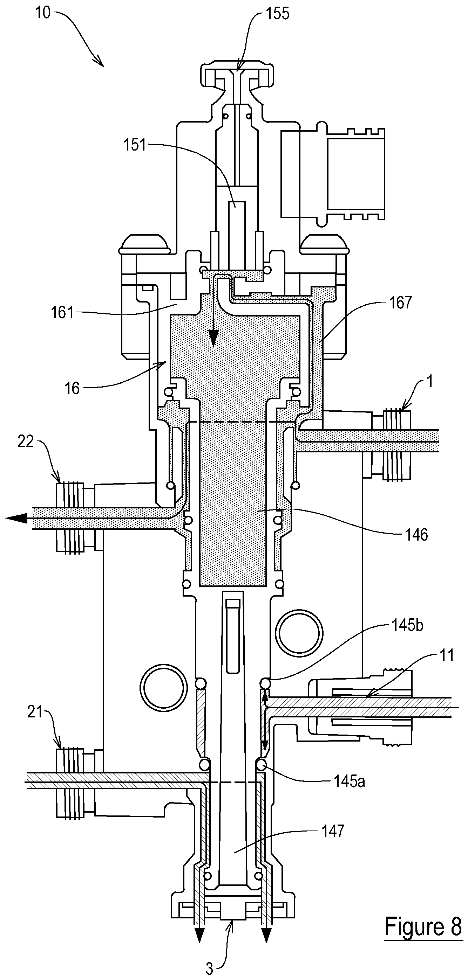

The second condition of the valve arrangement 10 (as shown in Figures 2 and 8) may be enabled by the energisation of the valve actuator, e.g. the solenoid 151, of the valve arrangement 10. Energisation of the solenoid 151 may be triggered when a predetermined condition is detected. The predetermined condition may be a signal indicative of vehicle load (e.g. a trailer load) being below a threshold. The threshold may be selected such that the detected vehicle load would not overload the other (e.g. standard) axles of the vehicle if the lift axle were lifted, for example. The signal indicative of load may be detected by an electronic braking system (EBS) 102 of the vehicle. The EBS 102 may control the solenoid 151 of the valve arrangement 10. In the second condition of the valve arrangement 10, the first port 1 is fluidly communicable with the fourth port 22, so as enable the supply of pressurised fluid to the actuator of the second axle. The second condition of the valve arrangement 10 may correspond with a lifted configuration of the second axle.

In the second condition of the valve arrangement 10 (as shown in figure 2), the valve 9 is in its second condition, with the piston 14 in its second position, such that the first port 1 is open and in fluid communication with the fourth port 22, so as to supply pressurised fluid to the actuator of the second axle; the second port 21 is closed; the third port 21 is in fluid communication with the fifth port 3. The first port 1 is in fluid communication with the fourth port 22 via the second fluid flow path 167 through the interface 16. Fluid is permitted to flow from the first port 1 along the second fluid flow path into the internal chamber 146 of the first part 141 of the piston 14, since the piston 14 is not seated against the interface 16 when in its second position. Fluid is permitted to flow into the chamber 13, around the exterior of the first part 141 of the piston 14 to the fourth port 22, to supply fluid to the lift actuator of the second axle, so as to raise the second (lift) axle. Fluid is not permitted to flow from the first port 1 to any other port in the second condition since the piston is seated against the first valve seat 122. A seal 145 may inhibit leakage of fluid past the valve seat 122 towards the second port 11, third port 21 or fifth port 3. The second port 11 is closed in the second configuration. The seal 145a prevents the flow of fluid from the second port 11 or the third port 21 through the or each aperture 148a into the internal chamber 147 of the second part 142 of the piston 14. A second seal 145b inhibits the flow of fluid from the second port 11 towards the first port 1 and the fourth port 22. The third port 21 is in fluid communication with the fifth port 3 in the second configuration. Fluid is permitted to flow into the chamber 13 around the outside of the second part 142 of the piston 14. The first seal 145a prevents the flow of fluid towards any port other than the fifth port 3. Fluid is permitted to flow through the openings 34 in the base member 33 of the fifth port 33.

The interface 16 provides advantages compared with existing lift axle valve arrangements. The interface 16 means that fewer components are required to connect the valve actuation arrangement 15 (e.g. the solenoid 151) with the valve body 12. A traditional arrangement of a lift axle valve requires a pair of seals between the valve body and the actuator (e.g. solenoid) around the inlet feed to the solenoid. The present arrangement 10 does not require these seals, since the interface 16 provides at least a part of the fluid flow path between the first port 1 and the valve actuation arrangement 15. The interface 16 may act as a liner for the valve body 12 and may protect the valve body 12 and/or the piston 14 against wear. The present valve arrangement is simpler than traditional lift valve arrangements.

The interface 16 may be formed as a single part. This may further improve the simplicity of the design, by minimising the number of components in the valve assembly. The interface 16 may be a separate component from the valve body 12 and/or the valve actuator arrangement 15. The interface component 16 may be integrated with the valve body and/or the valve actuator arrangement 15.

In the first condition (axle lowered) condition, the pressure at port 1 is maintained (i.e. port 1 is not vented as it is in existing arrangements). This may enable the omission of the resilient member (spring) 18.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A valve assembly for controlling a lift axle of a vehicle, the valve assembly including a valve body, a valve actuator assembly, and a piston moveable between a first position and a second position relative to the body, and an interface between the valve body and the valve actuator assembly, the interface including a seat for the piston and a connection part for enabling the connection of the valve body to the valve actuator assembly.

2. A valve assembly according to claim 1 wherein the interface includes at least one fluid flow path.

3. A valve assembly according to claim 2 wherein the interface includes a fluid flow path which forms part of a first fluid flow path of the valve assembly, between a supply of pressurised fluid an actuator of a vehicle lift axle.

4. A valve assembly according to claim 1 or claim 2 wherein either:
(a) the interface includes a fluid flow path which forms part of a second fluid flow path of the valve assembly, between an internal chamber of the piston and an exhaust port; or
(b) the interface includes a fluid flow path which forms part of a second fluid flow path of the valve assembly, between an internal chamber of the piston and an exhaust port, wherein the exhaust port of the second fluid flow path is an exhaust port of the valve actuation assembly.

5. A valve assembly according to any of the preceding claims wherein the interface includes a sleeve that extends into a chamber of the valve body.

6. A valve assembly according to any of the preceding claims wherein the interface includes a collar that is configured to engage with a part of the valve actuation assembly.

7. A valve assembly according to any of the preceding claims wherein the piston includes a first part and a second part, each part including a corresponding internal chamber.

8. A valve assembly according to claim 7 wherein at least one of first part and the second part of the piston includes an opening that enables fluid communication between the corresponding internal chamber and a port of the valve assembly.

9. A valve assembly according to claim 8 wherein the interface is configured to enable fluid flow through the opening that enables fluid communication between the internal chamber of the first part of the piston and an exhaust port of the valve actuation assembly when the piston is in the first position and to prevent the flow of fluid through the opening of the internal chamber of the first part of the piston when the piston is in the second position relative to the interface.

10. A valve assembly according to claim 8 or claim 9 wherein the interface is configured to close an inlet port communicable with a supply of pressurised fluid when the piston is in the first position relative to the interface, and to open the inlet port, to enable fluid communication between the supply of pressurised fluid and an actuator of a lift axle when the piston is in the second position relative to the interface.

11. A valve assembly according to any of the preceding claims wherein the valve actuator assembly includes at least one connection formation that corresponds with a connection formation of the interface.

12. A vehicle suspension assembly including a valve assembly according to any of claims 1 to 11.

13. A method of controlling a lift axle of a vehicle including providing a valve assembly including a valve body, a valve actuator assembly and a piston moveable between a first position corresponding to a first condition in which the lift axle of the vehicle is lowered and a second position corresponding to a second condition in which the lift axle of the vehicle is lifted, the valve actuator assembly including an electrically operated valve actuator that is configured to a receive a control signal and control the position of the piston in accordance with the control signal, wherein when the piston is in the first position, a first port of the valve body is closed; a second port of the valve body is fluidly communicable with a third port of the valve body, and a fourth port of the valve body is fluidly communicable with a fifth port of the body causing an actuator of the lift axle to be lowered; and wherein when the piston is in the second position, the first port is open and in fluid communication with the fourth port, so as to supply pressurised fluid to an actuator of the second axle to lower the second axle; the second port is closed and the third port is in fluid communication with the fifth port, the method including providing a fluid flow path through an interface provided between the valve body and the valve actuator assembly.

14. A method according to claim 13 including enabling fluid communication of the first port with the fourth port via a fluid flow path through the interface.

15. A method according to claim 13 or 14 wherein either:
(a) the control signal is provided from an electronic braking system of the vehicle;
(b) the control signal corresponds to a load signal indicative of the load of the vehicle; or
(c) the control signal is provided from an electronic braking system of the vehicle, and wherein the control signal corresponds to a load signal indicative of the load of the vehicle.
